# EUROPÄISCHE PATENTANMELDUNG

(11) **EP 1 918 145 A2**
(43) Veröffentlichungstag der Anmeldung: **07.05.2008**
(21) Anmeldenummer: 07020768.3
(22) Anmeldetag: 24.10.2007
(51) Int. Cl.: B60J 7/06

(54) **Nutzfahrzeugaufbau mit Dachholmen und Dachholm hierfür sowie Verfahren zur Herstellung eines Dachholms**

(30) Priorität: 04.11.2006 DE 102006052066
(71) Anmelder: TSE Trailer-System-Engineering GmbH & Co. KG, 72365 Ratshausen (DE)
(72) Erfinder: Seifritz, Harald, 82229 Seefeld (DE)
(74) Vertreter: Weber, Gerhard

(57) **Zusammenfassung**

Für einen Nutzfahrzeugaufbau mit Dachholmen und Rollenführungen werden vorteilhafte Ausführungen für solche Dachholme angegeben.

## Beschreibung

Die Erfindung betrifft einen Nutzfahrzeugaufbau mit Dachholmen, einen Dachholm für einen solchen Nutzfahrzeugaufbau und ein Verfahren zur Herstellung eines Dachholms.

Nutzfahrzeugaufbauten sind in einer Variante gebräuchlich, bei welcher ein durch eine Dachanordnung, insbesondere ein Planendach abgedeckter Laderaum im Dachbereich zwei in Fahrzeuglängsrichtung verlaufende Dachholme aufweist. In bevorzugter Ausführung sind die Dachholme durch Aluminium-Strangpressprofile gebildet, in deren Querschnitt vorteilhafterweise Führungsbahnen für z. B. Spriegel eines Faltdaches, Rollen einer Seitenplanenanordnung, Rollen von Schieberungen ausgebildet sein können. Durch die Ausführung als Aluminium-Strangpressprofile können auf einfache Weise mehrere Funktionen in die Holme integriert und das Gewicht im Interesse eines höheren Ladegewichts niedrig gehalten werden. Die Dachholme sind an entgegen gesetzten Enden an einem Frontaufbau und an ortsfesten Heckrungen vertikal abgestützt. Zusätzliche Rungen im Längsverlauf der Dachholme können für seitliche Beladungsmöglichkeiten als Schieberungen ausgeführt sein, so dass die Dachholme zeitweise nur an den entgegen gesetzten Enden abgestützt sind.

Die Dachholme sollen, um ein lichtes Rechteck-Profil des Laderaums möglichst wenig einzuschränken, an den Ecken nur um ein geringes Maß in den Laderaum ragen. Gebräuchliche Profile sind insbesondere sogenannte Standard-Curtain-Sider-Profile, wie z. B. in der DE 94 22 441 U1 beschrieben, bei welchen eine erste Rollenführung für eine längsverschiebbare Seitenplane und eine zweite Rollenführung für Schieberungen auf gleicher Höhe seitlich nebeneinander angeordnet sind und jeweils zwei Rollenlaufflächen aufweisen, welche zur automatischen Zentrierung von paarigen Rollenanordnungen gegeneinander geneigt sein können. Eine dritte Rollenführung zur vertikalen Abstützung von Spriegeln einer Faltverdeckanordnung ist oberhalb der ersten Rollenführung und eine vierte Rollenführung zur horizontalen Abstützung der Spriegel ist oberhalb der zweiten Rollenführung angeordnet.

In anderer gebräuchlicher Anordnung sind die erste und die zweite Rollenführung vertikal voneinander beabstandet angeordnet und die Seitenplane ist von der oben angeordneten ersten Rollenführung an der unten angeordneten zweiten Rollenführung vorbei geführt. Derartige Holmprofile ermöglichen eine große Laderaumbreite und Laderaumhöhe, weisen aber an dem vertikalen Profilschenkel Abschnitte geringer Verwindungssteifigkeit auf. Derartige Holmprofile sind z. B. aus der DE 100 35 103 A1, der DE 102 52 461 A1 oder der DE 197 56 617 A1 bekannt. Allerdings müssen Profile mit höherer Bauform für seitliche Beladung auch höher angehoben werden.

Der vorliegenden Erfindung liegt die Aufgabe zugrunde, einen Nutzfahrzeugaufbau mit Dachholmen und einen Dachholm hierfür anzugeben, welche insbesondere hinsichtlich des Holmquerschnitts weiter verbessert sind.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Durch die Ausbildung der ersten und der zweiten auf gleicher Höhe nebeneinander liegenden Rollenführung mit jeweils nur einer Rollenlauffläche ergibt sich auf Höhe der ersten und zweiten Rollenführung eine besonders geringe Baubreite des Dachholmprofils, welche vorteilhafterweise geringer als 40 mm, insbesondere ungefähr gleich 35 mm ist. Entsprechend der nur einen Rollenlauffläche der ersten und der zweiten Rollenführung in dem Dachholmprofil sind sowohl die ersten Rollen an Planenhaltern als auch die zweiten Rollen an Rungenhaltern jeweils als nur auf einer Seite der jeweiligen Halter angeordnete Rollen ausgeführt. Vorzugsweise sind in an sich bekannter Art eine dritte und eine vierte Rollenführung für vertikale bzw. horizontale Abstützung einer Spriegelanordnung vorgesehen.

Durch die Anordnung der ersten und der zweiten Rollenanordnung nebeneinander kann vorteilhafterweise der Profilquerschnitt über der ersten und der zweiten Rollenführung mehrwandig aufgebaut sein. Insbesondere kann die Ausbildung einer im Querschnitt geschlossenen Kammer seitlich von einer oberhalb der ersten Rollenführung liegenden dritten Rollenführung vorgesehen sein. Die Kammer kann insbesondere einen im wesentlichen rechteckigen Querschnitt aufweisen. Die Kammer liegt vorteilhafterweise über der zweiten Rollenführung. Eine der dritten Rollenführung seitlich abgewandte Kammerwand bildet vorzugsweise mit einer der ersten Rollenführung abgewandten Wand der zweiten Rollenführung eine durchgehende vertikale Wandfläche, welche in dem Nutzfahrzeugaufbau der Fahrzeugmitte zuweist. Die Kammer erstreckt sich vorteilhafterweise bis zur Oberseite des Profils.

In besonders vorteilhafter Weiterbildung kann vorgesehen sein, dass der Dachholm einen im Querschnitt einstückig zusammenhängenden Profilkörper aus Aluminium und ein mit diesem verbundenes, sich in Längsrichtung des Profilkörpers erstreckendes Stabilisierungselement, welches die Biegesteifigkeit des Dachholms erhöht, enthält. Das Stabilisierungselement ist vorteilhafterweise im wesentlichen über seine gesamte Länge mit dem Profilkörper verbunden. Hierdurch können vorteilhafterweise die mehreren Rollenführungen vollständig oder überwiegend in dem Aluminium-Profilkörper als einem Aluminium-Strangpressprofil ausgebildet sein und das Aussteifungselement kann vorteilhafterweise einen wesentlichen Anteil zur Biegesteifigkeit des verbundenen Profils, vorteilhafterweise wenigstens 25 %, insbesondere wenigstens 35 %, vorzugsweise wenigstens 45 % der gesamten Biegesteifigkeit des verbundenen Profils, insbesondere der Biegesteifigkeit gegen vertikale Durchbiegung des Dachholms in dessen Einbaulage beitragen.

Das Aussteifungselement kann vorteilhafterweise aus Kunststoff oder insbesondere aus Stahl bestehen. In bevorzugter Ausführung ist das Aussteifungselement in der oberhalb der zweiten Rollenführung liegenden Kammer angeordnet und ist vorzugsweise als Stahlprofil, insbesondere Stahlrohr ausgebildet. Zur Herstellung des Dachholms mit dem verbunden Stahlprofil als Aussteifungselement kann dabei vorteilhafterweise vorgesehen sein, dass das in linearer Form vorliegende Stahlprofil in die Kammer des gleichfalls in linearer Form vorliegenden Profilkörpers in Längsrichtung eingeschoben wird und dass nachfolgend das kombinierte Dachholmprofil aus Profilkörper und Stabilisierungselement aus der linearen Form in eine gekrümmte Form, z. B. durch Walzen, umgeformt wird, wobei Profilkörper und Stabilisierungselement zumindest an einem Teil der Innenwandflächen der Kammer aneinander anliegen.

Eine Verbindung von Profilkörper und Stabilisierungselement kann auch durch Reibung, elastische Verspannung, punktueller Fügeelemente, Formschluss, Clinchen, Kleben, Schweißen oder ähnliches erfolgen. Die Verbindung von Profilkörper und Stabilisierungselement ist vorteilhafterweise derart, dass eine Durchbiegung des Profilkörpers mit einer Durchbiegung des Stabilisierungselements in im wesentlichen gleichem Maß gekoppelt ist und umgekehrt.

Bei geringeren Anforderungen an die Biegesteifigkeit z. B. bei geringeren Längen von Dachholmen oder Dachholmabschnitten kann auf das zusätzliche Stabilisierungselement verzichtet werden.

Der erfindungsgemäße Dachholm kann vorteilhafterweise alle der genannten gebräuchlichen Dachholmprofile ohne Nachteile bei den Funktionen für Laderaummaße oder Stabilität die genannten bekannten Dachholmprofile ersetzen und darüber hinaus auch für Vollplanen-Schiebeverdecke oder das sogenannte Hamburger Dach eingesetzt werden. Die universelle Verwendbarkeit ergibt erhebliche wirtschaftliche Vorteile bei Beschaffung und Lagerhaltung.

Die Erfindung ist nachfolgend anhand bevorzugter Ausführungsbeispiele unter Bezugnahme auf die Abbildungen noch eingehend veranschaulicht. Dabei zeigt:
- Fig. 1: einen Nutzfahrzeugaufbau in Seitenansicht,
- Fig. 2: ein vorteilhaftes Dachholmprofil,
- Fig. 3: ein weiteres vorteilhaftes Dachholmprofil,
- Fig. 4: das Dachholmprofil nach Fig. 2 mit Stabilisierungselement,
- Fig. 5: ein weiteres Dachholmprofil mit Stabilisierungselement,
- Fig. 6: eine Abwandlung des Dachholmprofils nach Fig. 3 mit Stabilisierungselement.

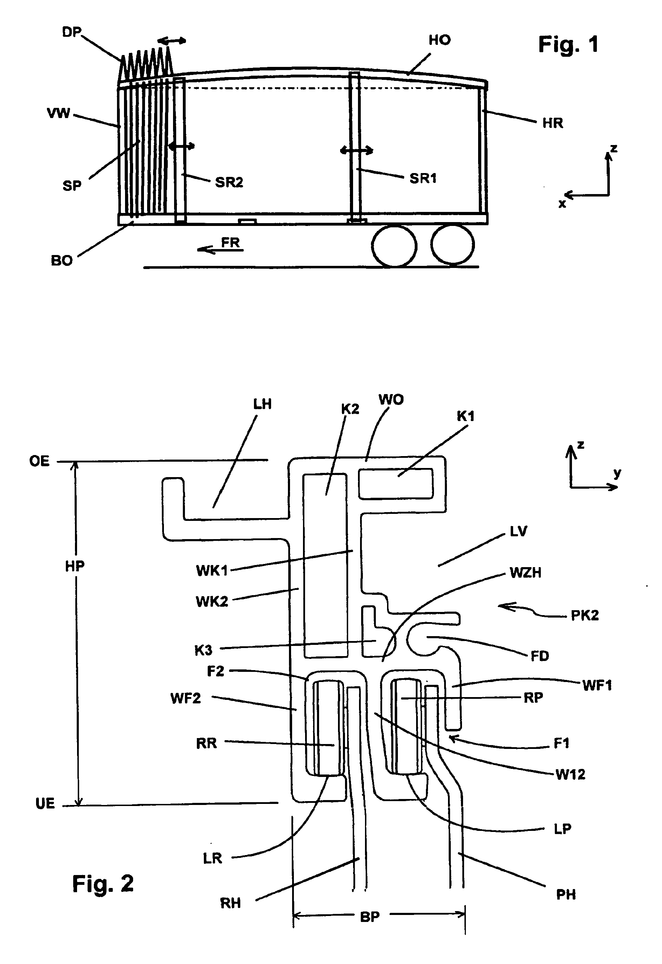

In Fig. 1 ist in Seitenansicht schematisch ein Nutzfahrzeugaufbau als Teil eines Zugfahrzeugs oder eines Anhängers skizziert. Ein Laderaum RA über einer Bodengruppe BO des Fahrzeugs ist oben durch Dachplane DP und seitlich durch in Längsrichtung zusammenschiebbare Seitenplanen SP begrenzt, die in einer in Fahrtrichtung FR verlaufenden Längsrichtung x eines mit eingezeichneten xyz-Koordinatensystems zur Vorderwand VW hin zusammenschiebbar sind. Die Dachplane DP ist über nicht im Detail dargestellte Spriegel entlang von zwei im Dachbereich den Laderaum RA im wesentlichen seitlich begrenzenden Dachholmen HO verschiebbar geführt, insbesondere mittels Rollenanordnungen an den Enden der Spriegel und mit diesen zusammenwirkenden Rollenlaufbahnen in den Dachholmen HO. Die Verschiebung der Seitenplanen SP erfolgt typischerweise gleichfalls über in Führungsbahnen der Dachholme geführte Rollen von einer Mehrzahl von Planenhaltern. Die Holme HO sind an ihren entgegen gesetzten Enden an der Vorderwand VW und an Heckrungen HR vertikal abgestützt. Die Dachholme HO sind ferner in Zwischenpositionen über zusätzliche Rungen gegen die Bodengruppe BO vertikal abgestützt, wobei diese Zwischenrungen für verbesserte seitliche Beladung häufig als Schieberungen ausgeführt sind, welche aus einer geschlossenen Stellung in definierten Längspositionen lösbar und in Längsrichtung verschiebbar sind. In der Skizze nach Fig. 1 ist eine erste Schieberunge SR1 an ihrer für Fahrbetrieb vorgesehenen Position und eine Schieberunge SR2 zur Erzielung einer vergrößerten seitlichen Öffnung in Längsrichtung verschoben eingezeichnet. Die Schieberungen sind über in weiteren Führungsbahnen der Dachholme geführte Rollen verschiebbar geführt.

Die Dachholme HO sind typischerweise gegen eine exakt lineare Form gekrümmt ausgeführt und zeigen im unbelasteten Zustand eine in z-Richtung nach oben gerichtete Wölbung zwischen ihren entgegen gesetzten Enden gegenüber einer mit unterbrochener Linie als Referenz eingezeichneten geraden Verbindung der Holmenden.

Die Fig. 1 ist nicht maßstäblich zu verstehen. Zur Veranschaulichung sind die relativen Maße verzerrt dargestellt. Insbesondere ist die relative Aufwölbung der Dachholme wesentlich geringer als in der Skizze und beträgt beispielsweise bei einer Länge der Dachholme von 13 m lediglich ca. 100-300 mm.

Die Dachholme HO sind typischerweise als Aluminium-Strangpressprofile ausgeführt, in deren Querschnitten bereits die Rollenlaufbahnen für die Spriegel, die Planenhalter und die Rungenhalter fertig ausgebildet sind.

Die Dachholme sollen, um das lichte Profil des Laderaums RA möglichst wenig zu beeinträchtigen, an den Ecken nur um ein geringes Maß in den Laderaum hineinragen und im Interesse geringen Gewichts und geringer Materialkosten wenig Aluminium erfordern. Da andererseits die Stabilität der Holme bei den typischen Belastungen zuverlässig gewährleistet sein soll, stellen die gängigen Profile immer einen Kompromiss zwischen den verschiedenen Anforderungen dar. Typische bekannte Profile sind das Standard-Curtain-Sider-Profil mit nebeneinander liegenden Rollenführungen für Schieberunge und Seitenplane und z. B. als Mega-Profile bezeichnete hohe Profile mit übereinander liegenden Rollenführungen für Schieberungen und Seitenplane.

In Fig. 2 ist im Querschnitt in einer y-z-Ebene senkrecht zur Längsrichtung eines Dachholms in Einbaulage ein bevorzugter Profilquerschnitt eines solchen Dachholms skizziert. Der Dachholm besteht dabei vorzugsweise in an sich gebräuchlicher Art aus einem Aluminium-Profilkörper PK2. Der Querschnitt des Profilkörpers zeigt in bei solchen Profilen an sich bekannter Art eine erste Rollenführung F1 mit einer ersten Rollenlauffläche LP für erste Rollen PR einer Seitenplanenanordnung, welche über Planenhalter PH mit den Rollen PR verbunden ist, und eine zweite Rollenführung F2 mit einer zweiten Rollenlauffläche LR für zweite Rollen RR einer Schieberungenanordnung, deren Schieberungen über Rungenhalter RH mit den Rollen RR verbunden sind. Die Rollenlaufflächen LP bzw. LR sind als im wesentlichen horizontale Fortsätze von Wandschenkeln WF1 der ersten Rollenführung F1 bzw. W12 der zweiten Rollenführung F2 ausgebildet. Die Rollenlaufflächen können gewölbt verlaufen. Die beiden Rollenführungen F1, F2 sind durch den Wandschenkel W12 als Zwischenwand voneinander abgetrennt, wobei die Zwischenwand zugleich eine Begrenzung für eine seitliche Verschiebung der geführten Rollen mit den Rungenhaltern RH dienen kann. Die Rollen RP an den Planenhaltern sind durch einen seitlich außen liegenden Wandschenkel WF1 gegen eine ungewollte Verschiebung in Seitenrichtung y gesichert.

Der Profilquerschnitt zeigt ferner in an sich gebräuchlicher Weise eine dritte Rollenführung LV zur vertikalen Abstützung einer nicht mit eingezeichneten Spriegelanordnung und eine vierte Rollenführung LH zur horizontalen Abstützung einer solchen Spriegelanordnung. Der Profilkörper PK2 weist zwischen einer oberen Begrenzungsebene OE und einer unteren Begrenzungsebene UE eine Höhe HP auf. Die Höhe HP ist vorteilhafterweise geringer als 110 mm.

Die dritte Rollenführung LV ist oberhalb der ersten Rollenführung F1 angeordnet. Oberhalb der dritten Rollenführung ist in dem Profilquerschnitt vorteilhafterweise eine geschlossene, insbesondere im wesentlichen rechteckige erste Kammer K1 ausgebildet.

Oberhalb der zweiten Rollenführung F2 und seitlich der dritten Rollenführung LV ist eine zweite Kammer K2 ausgebildet, welche sich vorzugsweise nach oben bis zu der oberen Begrenzungsebene OE erstreckt. Die zweite Kammer K2 bildet mit ihrer der dritten Rollenführung LV und der ersten Kammer K1 zugewandten ersten vertikalen Wand WK1 und ihrer dieser beabstandet gegenüber stehenden, zur Fahrzeugmitte, in Fig. 2 links, gewandten Vertikalwand WK2 ein Element innerhalb des Profilquerschnitts mit hoher Biegesteifigkeit gegen vertikale Durchbiegung. Zugleich bilden die horizontalen Wandabschnitte WZH in der oberen Begrenzung der Rollenführungen F1, F2 und die horizontale Wandfläche WO bei der oberen Begrenzungsebene OE Elemente mit hoher Biegesteifigkeit gegen horizontale Durchbiegung des Profils. Der lichte Innenquerschnitt der zweiten Kammer K2 ist vorzugsweise in der vertikalen Erstreckung wenigstens doppelt so groß wie in der horizontalen Erstrekkung.

Die der Fahrzeugmitte zugewandte vertikale Wand WK2 der zweiten Kammer und der der Fahrzeugmitte zugewandte Wandschenkel WF2 der zweiten Rollenführung bilden vorzugsweise eine durchgehende vertikale Wandfläche, welche bis zu der vierten Rollenführung LH durchgeht und vorzugsweise darüber hinaus bis zu der oberen Begrenzungsebene OE fortgesetzt ist. Die vierte Rollenführung LH ist in dem skizzierten bevorzugten Beispiel als zur Fahrzeugmitte von der vertikalen Wandfläche WK2 abstehend ausgeführt.

In dem Profil ist noch eine Aufnahme FD für eine über den oberen Planenrand hängende Dichtungsbahn und eine Kammer K3 ohne im weiteren maßgebliche Funktion ausgebildet.

Von besonderer Bedeutung ist, dass die Führungen F1 und F2 in Seitenrichtung y nebeneinander in im wesentlichen gleicher Höhe angeordnet sind und jeweils nur eine Rollenlauffläche LP bzw. LR aufweisen und dass die Rollenanordnungen für eine Seitenplanenanordnung und eine Schieberungenanordnung sowohl an den Planenhaltern PH als auch an den Rungenhaltern RH nur nach einer Seite, im skizzierten bevorzugten Beispiel in Richtung der Fahrzeugmitte gegen die Halter versetzt, Rollen RP bzw. RR tragen. Hierdurch kann die Breite BP des Profilkörpers im Bereich unterhalb der vierten Rollenführung LH gering gehalten werden, insbesondere kleiner als 40 mm, vorzugsweise ca. 35 mm. Zugleich kann durch die Anordnung der ersten Rollenführung F1 und der zweiten Rollenführung F2 in Seitenrichtung y nebeneinander die gesamte Höhe HP des Profilquerschnitts gering, insbesondere kleiner als 110 mm gehalten werden. Hierdurch ergibt sich auf vorteilhafterweise die Möglichkeit, einen Holm mit dem skizzierten oder, wie an weiteren nachfolgenden Beispielen noch veranschaulicht, ähnlichen Profil sowohl als Ersatz für die bisherigen Standard-Curtain-Sider-Profile als auch für die gebräuchlichen hohen schmalen Profile mit vertikal versetzten Rollenführungen für Seitenplanenanordnung und Schieberungenanordnung zu verwenden und dadurch ein bezüglich Einkauf und Lagerhaltung besonders vorteilhaftes Universalprofil bereit zu stellen. Insbesondere ergibt sich durch die geringe Höhe des Holmprofils nur ein geringes Maß für die für seitliche Beladung erforderliche Anhebung des Dachholms.

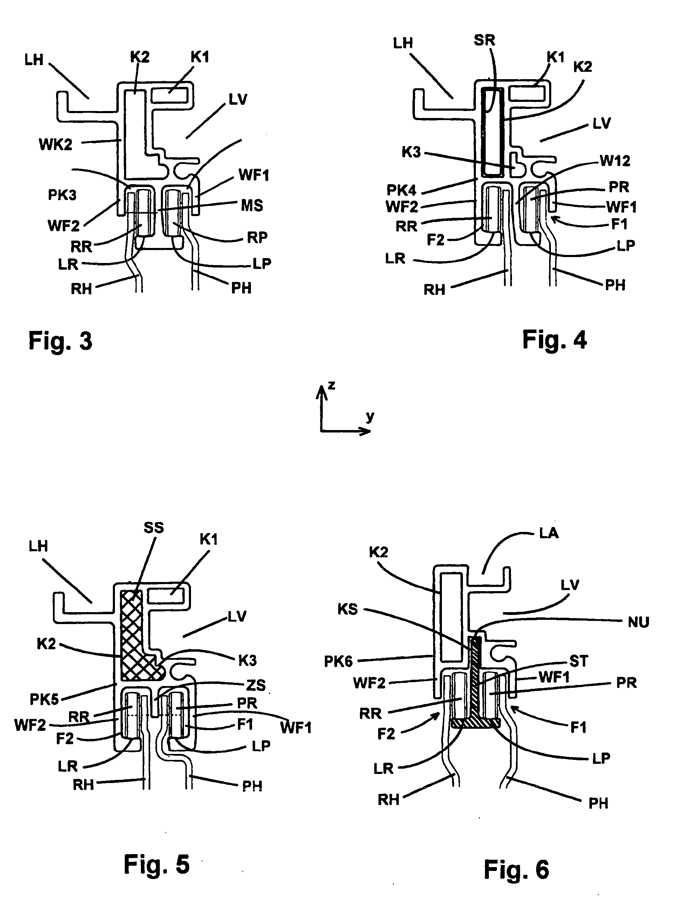

In Fig. 3 ist eine alternative Ausführung eines Dachholmprofils mit einem Profilkörper PK3 als Aluminium-Strangpressprofil skizziert, bei welchem die wesentlichen Merkmale des Profils nach Fig. 2, insbesondere die Anordnung der beiden Rollenführungen F1 und F2 in Seitenrichtung y nebeneinander, die Ausbildung je nur einer Rollenlauffläche LP bzw. LR in den beiden Rollenführungen F1, F2 und die Anordnung von Rollen RP bzw. RR auf nur jeweils einer Seite der Planen halter PH bzw. der Rungenhalter RH zeigt. Die Rollenlaufflächen LP bzw. LR sind in diesem Beispiel als in entgegen gesetzte Seitenrichtung abstehende horizontale Schenkel am unteren Ende eines Mittelstegs MS ausgebildet, welcher zugleich eine Trennwand zwischen den beiden Rollenführungen F1, F2 bildet. In Seitenrichtung y der Fahrzeugmitte abgewandt bzw. der Fahrzeugmitte zugewandt liegen vertikale Wandschenkel WF1, WF2 der Rollenführungen F1 bzw. F2, welche als seitliche Begrenzungen der Rollenführungen F1 bzw. F2 die in den Führungen geführten Rollenanordnungen sichern und dabei auch Anlageflächen für die Planenhalter PH bzw. Rungenhalter RH bilden können.

In dem Profil nach Fig. 3 sind auch weitgehend die übrigen Elemente des Profilquerschnitts aus Fig. 2 mit den weiteren Rollenführungen LV, LH und den Profilkammern übernommen, wobei die Möglichkeit skizziert ist, die Kammern K3 und K2 aus Fig. 2 zu einer einzigen Kammer zu verbinden.

Das Dachholmprofil mit dem in Fig. 2 skizzierten Querschnitt zeigt an sich durch die vorteilhafte Anordnung der einzelnen Elemente eine hohe Biegesteifigkeit gegen Durchbiegung sowohl in horizontaler als auch in vertikaler Richtung. Zur weiteren Erhöhung der Biegesteifigkeit, insbesondere gegen vertikale Durchbiegung, kann in bevorzugter Ausführung ein zusätzliches, sich in Längsrichtung des Dachholms erstreckendes und mit diesem verbundenes, vorzugsweise im wesentlichen über die gesamte Länge des Holms verbundenes Stabilisierungselement vorzugsweise aus einem anderen Material vorgesehen sein. In Fig. 4 ist hierfür zu dem Beispiel des Profilquerschnitts nach Fig. 2 ein Stahlrohr SR in der Kammer K2 vorgesehen, welches eine dem Kammerquerschnitt der Kammer K2 angepassten, im wesentlichen rechteckigen Querschnitt besitzt. Der Beitrag des Stabilsierungselements SR zur Biegesteifigkeit des gesamten Hohlprofils gegen Durchbiegung in vertikaler Richtung beträgt vorteilhafterweise wenigstens 25 %, insbesondere wenigstens 35 %, vorzugsweise wenigstens 45 % der Biegesteifigkeit des zusammengesetzten Dachholmprofils, insbesondere gegen vertikale Durchbiegung.

Zur Herstellung des in Fig. 4 skizzierten Dachholms wird vorzugsweise das in x-Richtung lineare Stabilisierungselement SR in den gleichfalls in x-Richtung linearen Profilkörper PK4 in dessen Kammer K2 eingeschoben und durch nachfolgendes Umformen des zusammengesetzten Dachholms aus der in x-Richtung linearen Form in die in Fig. 1 skizzierte gekrümmte Form werden der Profilkörper PK4 und das Stabilsierungselement SR gemeinsam verformt und bleiben fest miteinander verbunden, liegen insbesondere unter Vorspannung in vertikaler Richtung an zumindest Teilflächen der Innenwandflächen der Kammer K2 aneinander an.

Das Stabilsierungselement SR kann auch andere Formen als die skizzierte aufweisen. Die Kammer K2 kann auch in vertikaler Richtung unterteilt sein, wobei aber der in vertikaler Richtung durchgehende lichte Querschnitt mit dem eingesetzten Stabilsierungselement durch die große durchgehende vertikale Abmessung von besonderem Vorteil ist. Profilkörper und Stabilisierungselement können auch auf andere Arten miteinander verbunden sein.

In Fig. 5 ist eine weitere Profilvariante mit einer anderen Ausführung eines Stabilsierungselements skizziert. Die Rollenlaufflächen LP und LR der ersten Rollenführung F1 und der zweiten Rollenführung F2 sind hier jeweils an horizontalen Fortsätzen von Wandschenkeln WF1 und WF2 ausgeführt, welche bezüglich der nebeneinander liegenden Rollenführung jeweils nach außen weisend sind und deren horizontale Fortsätze zur vertikalen Mittelebene des Profils hin gerichtet sind. Ein vertikaler Zwischensteg ZS, welcher von der oberen Begrenzungswand WZH der Rollenführungen nach unten weist, bildet eine Trennwand zwischen den beiden Rollenführungen und kann auch als Begrenzung gegen eine Verschiebung der Rollen mit den Haltern in y-Richtung dienen. Die übrigen Merkmale und Vorteile der Rollenführungen nach Fig. 2 und Fig. 3 sind auch in diesem Beispiel erhalten. Die Kammern K2 und K3 des Beispiels nach Fig. 2 sind in dem Profilkörper PK5 des Beispieles nach Fig. 5 in gleicher Weise wie in dem Beispiel nach Fig. 3 zu einer einzigen Kammer zusammen gefasst.

Als Stabilsierungselement SS ist in dem Beispiel nach Fig. 5 eine Ausfüllung der Kammer K2 mit einem aussteifenden Material vorgesehen, welches sich dem gesamten, nicht rechteckigen Kammerquerschnitt anpasst. Vorzugsweise besteht das Stabilisierungselement SS aus einem Kunststoff, welcher in flexibler oder fließfähiger Form in die Profilkammer K2 eingebracht und in dieser ausgehärtet ist, wobei der Aushärtung eine Aufschäumung vorausgehen kann. Dem Kunststoffmaterial können für eine erhöhte Zugfestigkeit Faserelemente nach Art eines glasfaser- oder kohlefaser-verstärkten Kunststoffs beigemischt sein.

Die Aussteifungselemente SR nach Fig. 4 und SS nach Fig. 5 können in vorteilhafter Weise auch kombiniert sein in der Art, dass der Innenraum des Aussteifungselements SR durch ein Material eines Aussteifungselements SS nach Fig. 5 gefüllt und hierdurch die Form des Aussteifungselements SR stabilisiert ist.

In Fig. 6 ist eine weitere Variante eines Profilquerschnitts eines Profilkörpers PK6 als Aluminium-Strangpressprofils in Verbindung mit einer weiteren Variante eines Aussteifungsprofils skizziert. In dem in Fig. 6 skizzierten Profilquerschnitt ist die zur Fahrzeugmitte hin angeordnete vierte Rollenführung LH der vorangegangenen Beispiele ersetzt durch eine vierte Rollenführung LA, welche auf der der Fahrzeugmitte weg weisenden Seite der Kammer K2 des Profilkörpers angeordnet ist. Die erste Kammer K1 der vorangegangenen Profilbeispiele entfällt dadurch. Die Rollenlaufflächen LP und LR sind in dem skizzierten Beispiel ähnlich der Variante nach Fig. 3 an horizontalen Schenkeln eines nach unten ragenden mittleren Stegs ST ausgebildet, wobei in diesem Fall der Steg mit den Rollenlaufflächen durch ein Stabilisierungselement ST mit umgedrehtem T-förmigem Querschnitt gebildet ist, welches in eine nach unten offene Nut LV des Profilkörpers PK6 eingefügt und dort über eine Klebeverbindung KS fest mit dem Profilkörper PK6 verbunden ist.

Die verschiedenen Profilquerschnitte und die verschiedenen Stabilsierungselemente können, soweit sich die Merkmale nicht widersprechen, auch in anderer Kombination realisiert sein. Die Materialien für die einzelnen Komponenten sind nicht auf die genannten bevorzugten Beispiele beschränkt. Das Stabilisierungselement SR nach Fig. 5 kann auch eine andere Form als die skizzierte Rohrform besitzen, beispielsweise eine H-Form oder eine Doppel-T-Form. Die der seitlichen Sicherung der Planen halter PH mit Rollen RP in den ersten Führungen bzw. der Rungenhalter RH mit Rollen RP in den zweiten Führungen dienenden vertikalen Wandschenkel oder Stege ohne seitliche Fortsätze mit Rollenlaufflächen sind in ihrer vertikalen Erstreckung nach unten vorteilhafterweise auf ein geringeres Maß als die vertikale Erstreckung der Rollenführungen beschränkt, reichen aber vorteilhafterweise wenigstens bis zu den oberen Enden der jeweiligen Halter, so dass die in y-Richtung begrenzende Führung durch Anlage der Halter an diesen Wandschenkeln oder Stegen erfolgt und die Halter unterhalb der Rollenachsen von den Rollenlaufbahnen weg gebogen verlaufen können. Bei dem Beispiel der Fig. 2 ist als Zwischenwand dienende Wandschenkel W12 am unteren Ende leicht von den Rungenhaltern RH weg geneigt verlaufend ausgebildet.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Nutzfahrzeugaufbau mit einer längsverschiebbaren Seitenplanenanordnung, mit längsverschiebbaren Schieberungen und Dachholmen mit jeweils einer ersten Rollenführung für erste Rollen der Seitenplanenanordnung an Planenhaltern und einer zweiten Rollenführung für zweite Rollen von Schieberungen an Rungenhaltern, wobei erste und zweite Rollenführung seitlich nebeneinander verlaufen, **dadurch gekennzeichnet, dass** sowohl erste als auch zweite Rollenführung nur jeweils eine Rollenlauffläche aufweisen und erste Rollen nur an einer Seite der Planenhalter und zweite Rollen nur an einer Seite der Rungenhalter angeordnet sind.

2. Nutzfahrzeugaufbau nach Anspruch 1, **dadurch gekennzeichnet, dass** der Dachholm eine dritte Rollenführung aufweist, in welcher eine Spriegelanordnung mit dritten Rollen mit horizontalen Rollenachsen horizontal abgestützt ist.

3. Nutzfahrzeugaufbau nach Anspruch 1 oder 2, **dadurch gekennzeichnet, dass** der Dachholm eine vierte Rollenführung aufweist, in welcher eine Spriegelanordnung mit vierten Rollen horizontal abgestützt ist.

4. Nutzfahrzeugaufbau nach einem der Ansprüche 1 bis 3, **dadurch gekennzeichnet, dass** der Dachholm an entgegen gesetzten Enden abgestützt ist und zwischen den Enden einen nach oben gewölbten Verlauf aufweist.

5. Dachholm in Form eines langgestreckten Profils mit für einen Nutzfahrzeugaufbau nach einem der Ansprüche 1 bis 4, mit
- einer ersten Rollenführung für eine Schiebeplanenanordnung
- einer zweiten Rollenführung für Schieberungen,
wobei erste und zweite Rollenführung in Einbaulage des Profils seitlich nebeneinander liegen, **dadurch gekennzeichnet, dass** sowohl erste als auch zweite Rollenführung nur eine Rollenlauffläche aufweisen.

6. Dachholm nach Anspruch 5, **dadurch gekennzeichnet, dass** das Profil auf Höhe der ersten und zweiten Rollenführung eine Querabmessung von weniger als 40 mm aufweist.

7. Dachholm nach Anspruch 5 oder 6, **dadurch gekennzeichnet, dass** oberhalb der ersten Rollenführung eine dritten Rollenführung für die vertikale Abstützung dritter Rollen einer Spriegelanordnung in dem Profilquerschnitt ausgebildet ist.

8. Dachholm nach Anspruch 7, **dadurch gekennzeichnet, dass** die erste Rollenführung nicht breiter ist als die dritte Rollenführung.

9. Dachholm nach Anspruch 7 oder 8, **dadurch gekennzeichnet, dass** seitlich der dritten Rollenführung und oberhalb der zweiten Rollenführung eine im Querschnitt geschlossene Kammer in dem Profil ausgebildet ist.

10. Dachholm nach Anspruch 9, **dadurch gekennzeichnet, dass** die Kammer bis zur oberen Begrenzung des Profils verläuft.

11. Dachholm nach Anspruch 9 oder 10, **dadurch gekennzeichnet, dass** die zweite Rollenführung und die Kammer der ersten und der dritten Rollenführung abgewandt eine gemeinsame vertikale Wandfläche besitzen.

12. Dachholm nach einem der Ansprüche 5 bis 11, **dadurch gekennzeichnet, dass** das Profil eine vierte Rollenführung für die horizontale Abstützung einer Spriegelanordnung aufweist.

13. Dachholm nach Anspruch 12, **dadurch gekennzeichnet, dass** die vierte Rollenführung gegenüber der über der zweiten Rollenführung liegenden Kammer seitlich versetzt angeordnet ist.

14. Dachholm nach Anspruch 13, **dadurch gekennzeichnet, dass** die vierte Rollenführung auf der der dritten Rollenführung abgewandten Seite der Kammer angeordnet ist.

15. Dachholm nach Anspruch 13, **dadurch gekennzeichnet, dass** die vierte Rollenführung oberhalb der dritten Rollenführung angeordnet ist.

16. Dachholm nach einem der Ansprüche 5 bis 15, **dadurch gekennzeichnet, dass** das Profil einen Profilkörper aus Aluminium und ein zusätzliches Stabilisierungselement aus einem anderen Material enthält, welches die Biegesteifigkeit des Dachholms erhöht.

17. Dachholm nach Anspruch 16, **dadurch gekennzeichnet, dass** zumindest ein überwiegender Teil der Rollenführungen an dem Profilkörper ausgebildet ist.

18. Dachholm nach Anspruch 16 oder 17, **dadurch gekennzeichnet, dass** das Stabilsierungselement in einer Kammer des Profilkörpers angeordnet ist.

19. Dachholm nach einem der Ansprüche 16 bis 18, **dadurch gekennzeichnet, dass** das Stabilisierungselement aus Stahl besteht.

20. Dachholm nach einem der Ansprüche 16 bis 18, **dadurch gekennzeichnet, dass** das Stabilisierungselement aus Kunststoff besteht.

21. Dachholm nach einem der Ansprüche 16 bis 20, **dadurch gekennzeichnet, dass** das Stabilisierungselement im wesentlichen über die ganze Länge des Dachholms mit dem Profilkörper verbunden ist.

22. Verfahren zur Herstellung eines aus einem Aluminium-Profilkörper und einem Aussteifungselement zusammengesetzten Dachholm, **dadurch gekennzeichnet, dass** das Aussteifungselement in linearer Form in eine Profilkammer des gleichfalls in linearer Form vorliegenden Profilkörpers eingeschoben und danach Profilkörper und Stabilisierungselement gemeinsam in eine gekrümmte Form umgeformt werden.
